# EUROPÄISCHE PATENTANMELDUNG

(11) **EP 0 958 948 A2**
(43) Veröffentlichungstag der Anmeldung: **24.11.1999**
(21) Anmeldenummer: 99890154.0
(22) Anmeldetag: 17.05.1999
(51) Int. Cl.: B60C 27/08

(54) **Verschluss für Reifenketten**

(30) Priorität: 19.05.1998 DE 29808865 U
(71) Anmelder: PEWAG AUSTRIA GmbH, A-8010 Graz (AT)
(72) Erfinder: Kronsteiner, Herbert, 8052 Graz (AT); Manhal, Herbert, 8047 Graz (AT)
(74) Vertreter: Matschnig, Franz, Dipl.-Ing.

(57) **Zusammenfassung**

Ein Verschluß für Reifenketten, bestehend aus zwei ineinanderhakbaren Verbindungsgliedern (1, 2), die je über Anschlußglieder (4, 7) mit Laufkettengliedern (5, 12, 8, 9) verbunden sind, und jedes Verbindungsglied eine Aufnahmeöffnung (10, 11) und einen in diese führenden Einführschlitz (S1, S2) aufweist, wobei die Gliedschenkel jedes Verbindungsgliedes beidseitig des Einführschlitzes zu diesem in Schrägflächen (SF) zulaufen, jedes Verbindungsglied (1, 2) eine von der Aufnahmeöffnung (10, 11) abgesonderte Bohrung (3, 6) für die Aufnahme eines Anschlußgliedes (4, 7) aufweist und in einem (1) der beiden Anschlußglieder die Achse (al) der Bohrung (3) im wesentlichen normal zu der Achse (bl) der Aufnahmeöffnung (10) verläuft, wogegen in dem anderen (2) der beiden Aufnahmeglieder die Achsen (a2), (b2) der Bohrung (6) und der Aufnahmeöffnung (11) im wesentlichen parallel zueinander verlaufen.

## Beschreibung

Die Erfindung bezieht sich auf einen Verschluß für Reifenketten, bestehend aus zwei ineinanderhakbaren Verbindungsgliedern, die je über Anschlußglieder mit Laufkettengliedern verbunden sind, und jedes Verbindungsglied eine Aufnahmeöffnung und einen in diese führenden Einführschlitz aufweist, wobei die Gliedschenkel jedes Verbindungsgliedes beidseitig des Einfuhrschlitzes zu diesem in Schrägflächen zulaufen.

Ein Verschluß dieser Art geht aus der DE 25 33 838 C hervor. Dabei sind die an die beiden Verbindungsglieder anschließenden Anschlußglieder jeweils in die Aufnafmeöffnung eines Verschlußgliedes eingehängt, sodaß im geschlossenen Zustand in jeder Aufnahmeöffnung sowohl ein Schenkel des anderen Verschlußgliedes als auch ein Anschlußglied eingehängt sind.

Diese bekannte Lösung findet zwar mit einer einzigen Ausführung von Verschlußgliedern das Auslangen, da je Verschluß zwei identisch ausgebildete Verschlußglieder verwendet werden, doch steht dem als Nachteil gegenüber, daß eines der beiden Anschlußglieder auf der Lauffläche eines Reifens steht und das andere liegt. Dadurch wird an der Verschlußstelle der Laufketten eine Asymmetrie erzeugt, die zu erhöhtem Verschleiß, insbesondere des stehenden Anschlußgliedes, ebenso führt, wie zu unruhigerem Lauf.

Es ist eine Aufgabe der Erfindung, einen Verschluß für Reifenketten zu schaffen, der leicht bedienbar, im Betrieb sicher gegen unbeabsichtigtes Öffnen, und der frei von den obgenannten Nachteilen ist.

Diese Aufgabe wird ausgehend von einem Verschluß der eingangs genannten Art erfindungsgemäß dadurch gelöst, daß jedes Verbindungsglied eine von der Aufnahmeöffnung abgesonderte Bohrung für die Aufnahme eines Anschlußgliedes aufweist und in einem der beiden Anschlußglieder die Achse der Bohrung im wesentlichen normal zu der Achse der Aufnahmeöffnung verläuft, wogegen in dem anderen der beiden Aufnahmeglieder die Achsen der Bohrung und der Aufnahmeöffnung im wesentlichen parallel zueinander verlaufen.

Bei der Kette nach der Erfindung ergibt sich eine stabile Lage der beiden Verbindungsglieder, da die je daran anschließenden Anschlußglieder in Tangentialebenen zur Reifenlauffläche liegen. Außerdem hat sich gezeigt, daß keines der an dem Verschluß beteiligten Glieder wesentlich rascher abgenutzt wird, als andere Glieder des Verschlusses.

Bei einer vorteilhaften Weiterbildung der Erfindung ist vorgesehen, daß jenes der beiden Verschlußglieder, bei welchem die Achsen von Bohrung und Aufnahmeöffnung parallel zueinander verlaufen, einen verbreiterten Rücken zur Auflage auf der Reifenfläche besitzt. Diese Maßnahme führt zu einer weiteren Verbesserung in Hinblick auf ruhigen Lauf und Abnützung.

Falls die beiden Anschlußglieder kreisringförmig ausgebildet sind, lassen sich auch zwei oder mehrere Laufkettenglieder in ein Anschlußglied einhängen, ohne daß es zu einem unerwünschten Aneinanderreiben der eingehängten Laufkettenglieder kommt.

Dabei ist das genannte Einhängen noch erleichtert, falls der Durchmesser jedes Anschlußgliedes größer ist, als die Gliedlänge der Laufkettenglieder.

Nicht nur in Hinblick auf die Festigkeit, sondern auch zur besseren Autlage auf der Reifenlauffläche kann es sich empfehlen, wenn die Drahtstärke des Anschlußgliedes größer ist als jene der Laufkettenglieder.

Die Erfindung ist auch durch eine Reifenkette verwirklicht, die zumindest einen Verschluß gemäß der Erfindung aufweist.

Mit weiteren Vorteilen ist die Erfindung im folgenden anhand einer beispielsweisen Ausführungsform näher erläutert, die in der Zeichnung veranschaulicht ist. In dieser zeigen
Fig. 1 eine Seitenansicht eines Abschnitts einer Reifenkette mit einem Verschluß gemäß der Erfindung und
Fig. 2 eine Draufsicht auf diesen Abschnitt der Reifenkette, radial auf die Reifenlauffläche gesehen.

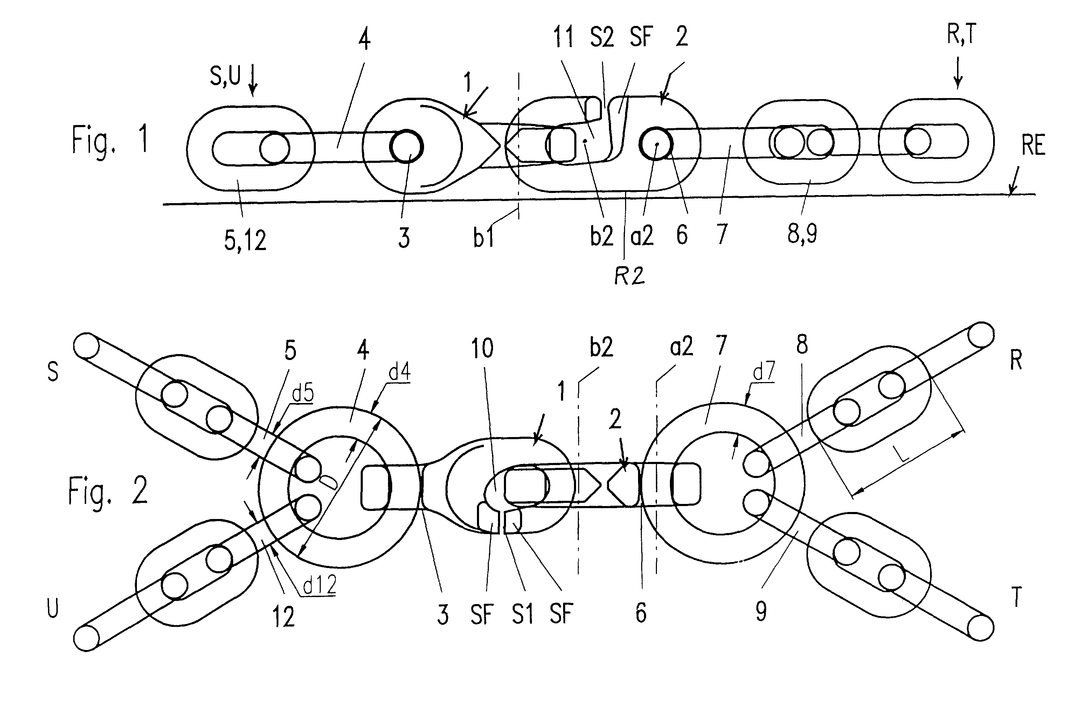

Aus Fig. 1 und Fig. 2 geht ein Abschnitt einer Reifenkette hervor, in dem vier mit S, U, und R, T bezeichnete Kettenstränge über einen lösbaren Verschluß miteinander verbunden werden sollen. Natürlich kann der Verschluß auch nur zwei oder drei, ebenso aber auch mehr Kettenstränge verbinden. Dieser Verschluß weist zwei ineinander hakbare Verbindungsglieder 1 und 2 auf, wobei das eine der beiden Verbindungsglieder, nämlich das Verbindungsglied 1, eine Bohrung 3 für die Aufnahme eines Anschlußgliedes 4 besitzt, und in dieses Anschlußglied sind Laufkettenglieder 5, 12 des Kettenstranges S bzw. U eingehängt.

Ebenso besitzt das zweite Verbindungsglied 2 eine Bohrung 6, in welches ein Anschlußglied 7 eingehängt ist, und in dieses Anschlußglied 7 sind im vorliegenden Fall Laufkettenglieder 8, 9 der Kettenstränge R, T eingehängt.

Jedes der beiden Verbindungsglieder 1 bzw. 2 besitzt neben der Bohrung 3 bzw. 6 auch eine davon abgesonderte Aufnahmeöffnung 10 bzw. 11. Die beiden Verbindungsglieder 1 und 2 können in der gezeigten Weise mit ihren Bugen in den Aufnahmeöffnungen 11 bzw. 10 verhakt sein.

Um das genannte Verhaken zu ermöglichen, besitzt jedes der beiden Verbindungsglieder 1 bzw. 2 einen Einführschlitz S1 bzw. S2, welcher je einen Längsschenkel der Verbindungsglieder öffnet, wobei beidseitig der Einführschlitze S1 und S2 hier mit SF bezeichnete Schrägflächen bzw. Abschrägungen zu den Einrührschlitzen S1 und S2 führen, wodurch sich die Schenkel der Verbindungsglieder zu den Schlitzen hin verjüngen. Die Schrägflächen SF und die Breite der Einführschlitze S1 und S2 sind so bemessen, daß man durch geeignetes Verschwenken und Verschieben der beiden Verbindungsglieder 1 und 2 diese voneinander lösen kann. Beispielsweise kann dies geschehen, wenn man in Fig. 1 das rechte Verbindungsglied 2 zunächst um 90 °, noch in der Zeichenebene bleibend, nach oben schwenkt, dann das Glied um 90 ° nach vorne dreht und schließlich bei Ineinandergreifen aller 8 Schrägflächen nach vorne aus dem Verbindungsglied 1 herauszieht.

Wie der Zeichnung entnehmbar ist, sind die beiden Verbindungsglieder 1 und 2 nicht gleich gestaltet. Vielmehr verläuft die Achse A1 der Bohrung 3 des Verbindungsgliedes 1 senkrecht zu der Achse B1 der Aufnahmeöffnung 10 des Verbindungsgliedes 1, wogegen bei dem Verbindungsglied 2 die entsprechenden Achsen, hier bezeichnet mit b2 und a2, parallel zu einander verlaufen. Dadurch ergibt sich, daß die Anschlußglieder 4 und 7 zu beiden Seiten der beiden Verbindungsglieder 1 und 2 beide in Tangentialebenen bezüglich der hier symbolisch mit RE bezeichneten Reifenlauffläche liegen, in der schematischen Zeichnung in einer Ebene. Das Verbindungsglied 2, welches, wie aus Fig. 1 ersichtlich, auf der Reifenlauffläche RE aufliegt, besitzt einen verbreiterten Rücken R2, wodurch sich eine ruhige Lage auf der Reifenlauffläche RE ergibt.

Der dargestellte und beschriebene Verschluß weist als besonders günstige Eigenschaften auf, daß es keine bevorzugte Abnutzung irgendeines der für den Verschluß verwendeten Glieder gibt, vor allem deshalb da die beiden Anschlußglieder 4 und 7 annähernd in der gleichen Ebene, jedenfalls tangential zur Reifenlauffläche liegen. Die zuletzt genannten Anschlußglieder 4 und 7 sind mit Vorteil kreisförmig gestaltet, da sich hierdurch, wie rechts aus Fig. 2 ersichtlich, ohne weiteres zwei oder mehr Kettenstränge der Laufkette einhängen lassen, ohne daß die eingehängten Glieder aneinander reiben und sich verfrüht abnützen. Dabei ist es zu empfehlen, wenn der Durchmesser D dieser Anschlußglieder, die Gliedlänge L der Kettenlaufglieder übersteigt. Überdies ist es zweckmäßig, wenn die Drahtstärke d4 der Anschlußglieder 4 und 7 die Drahtstärke d5, d12 der Laufkettenglieder 5, 12, 8 und 9 übersteigt, was sich nicht nur auf die Festigkeit, sondern auch auf den ruhigen Lauf der Kette auswirken kann.

Als weiterer Vorteil der Erfindung hat sich bei der praktischen Anwendung gezeigt, daß der Verschluß ein unbewußtes, verdrehtes und damit falsches Einhängen unterbindet, was sich durch die Anbindung der Verschlußhaken an das Kettennetz ergibt.

## Patentansprüche

1. Verschluß für Reifenketten, bestehend aus zwei ineinanderhakbaren Verbindungsgliedern (1, 2), die je über Anschlußglieder (4, 7) mit Laufkettengliedern (5, 12, 8, 9) verbunden sind, und jedes Verbindungsglied eine Aufnahmeöffnung (10, 11) und einen in diese führenden Einführschlitz (S1, S2) aufweist, wobei die Gliedschenkel jedes Verbindungsgliedes beidseitig des Einführschlitzes zu diesem in Schrägflächen (SF) zulaufen,
**dadurch gekennzeichnet, daß**
jedes Verbindungsglied (1, 2) eine von der Aufnahmeöffnung (10, 11) abgesonderte Bohrung (3, 6) für die Aufnahme eines Anschlußgliedes (4, 7) aufweist und in einem (1) der beiden Anschlußglieder die Achse (a1) der Bohrung (3) im wesentlichen normal zu der Achse (b1) der Aufnahmeöffnung (10) verläuft, wogegen in dem anderen (2) der beiden Aufnahmeglieder die Achsen (a2, b2) der Bohrung (6) und der Aufnahmeöffnung (11) im wesentlichen parallel zueinander verlaufen.

2. Verschluß nach Anspruch 1, **dadurch gekennzeichnet, daß** jenes (2) der beiden Verschlußglieder, bei welchem die Achsen (a2, b2) von Bohrung (6) und Aufnahmeöffnung (11) parallel zueinander verlaufen, einen verbreiterten Rücken (R2) zur Auflage auf der Reifenfläche besitzt.

3. Verschluß nach einem der Ansprüche 1 oder 2, **dadurch gekennzeichnet, daß** die beiden Anschlußglieder (4, 7) kreisringförmig ausgebildet sind.

4. Verschluß nach einem der Ansprüche 3 oder 4, **dadurch gekennzeichnet, daß** die Drahtstärke (d4) des Anschlußgliedes (4) größer ist als jene (d5) der Laufkettenglieder (5).

5. Reifenkette mit zumindest einem Verschluß gemäß einem der Ansprüche 1 bis 5.
